# EUROPÄISCHE PATENTSCHRIFT

(11) **EP 3 993 913 B1**
(45) Veröffentlichungstag und Bekanntmachung des Hinweises auf die Patenterteilung: **03.05.2023**
(21) Anmeldenummer: 19742284.3
(22) Anmeldetag: 02.07.2019
(51) Int. Cl.: B05C 9/04, F16B 33/00

(54) **VERFAHREN ZUM DICHTENDEN ABDECKEN EINES SCHRAUBENKOPFES**
METHOD FOR COVERING A SCREW HEAD IN A SEALED MANNER
PROCÉDÉ POUR RECOUVRIR UNE TÊTE DE VIS DE MANIÈRE ÉTANCHE

(43) Veröffentlichungstag der Anmeldung: 11.05.2022
(73) Patentinhaber: Lisa Dräxlmaier GmbH, 84137 Vilsbiburg (DE)
(72) Erfinder: MAGUNIA, Robert, 84144 Geisenhausen (DE); POGADL, Nina, 84036 Landshut (DE)
(86) Internationale Anmeldenummer: PCT/DE2019/200067
(87) Internationale Veröffentlichungsnummer: WO 2021/000978

(56) Entgegenhaltungen:
- EP-A1- 1 733 799
- EP-A1- 2 842 457
- DE-A1-102010 001 454
- JP-A- H10 165 860
- US-A1- 2017 066 231
- US-A1- 2017 282 196

## Beschreibung

Die Erfindung betrifft ein Verfahren zum dichtenden Abdecken eines Schraubenkopfes einer Schraube und ein Auftragsystem.

Schraubverbindungen können genutzt werden, um Bauteile aneinander zu fixieren. Beispielsweise weisen Energiespeicher bzw. Batterien für Kraftfahrzeuge im Allgemeinen eine metallische Konstruktion auf, die z.B. einen steifen Rahmen, insbesondere aus Aluminium, sowie einen Boden und einen Deckel besitzen. Zum Schutz der Batteriezellen und der Elektronik und um die EMV-Anforderung zu erfüllen, kann der Deckel verschraubt werden, beispielsweise von einem Roboter in einem Schraubenabstand von 6,5 cm. Die vorgestanzten Schraublöcher im Deckel sind hierbei größer gehalten, um eventuellen Schraubgrad aufzunehmen. Hierbei kann es vorkommen, dass leicht versetzte Schrauben nicht mehr komplett die Öffnung abdecken können und daher das Gehäuse undicht wird.

Beim Bau von beispielsweise Batterien wird ein Gehäuse mit einem Deckel verschlossen. Um den Deckel wieder demontieren zu können, kann der Deckel aufgeschraubt und/oder aufgeklebt werden. Damit Anforderungen an die elektromagnetische Verträglichkeit, EMV, erfüllt werden können, wird insbesondere geschraubt, wobei zum Schrauben der Deckel mit Bohrungen ausgestattet sein kann. Im Abstand von beispielsweise 6,5 cm können Schrauben in den Rahmen des Deckels eingedreht werden. Je nach Größe der Batterien können das beispielsweise 200 Schrauben pro Werkstück sein. Aufgrund der komplexen Schraub-Technik und der großen Toleranzen der Schrauben, führt der Fügeprozess zu keiner 100%tigen Dichtheit im Bereich der mechanischen Schnittstelle. Für eine funktionierende Batterie ist eine Dichtheit der Verschraubung auf Lebenszeit vorteilhaft.

Der Schraubprozess und die Toleranzen der Schrauben und des Deckels, können zu etlichen Zuständen führen, die eine undichte Schraubverbindung hinterlassen, beispielsweise stark versetzt, schräg eingeschraubt, zu hoch, Span unter dem Kopf, Kopf abgerissen etc.

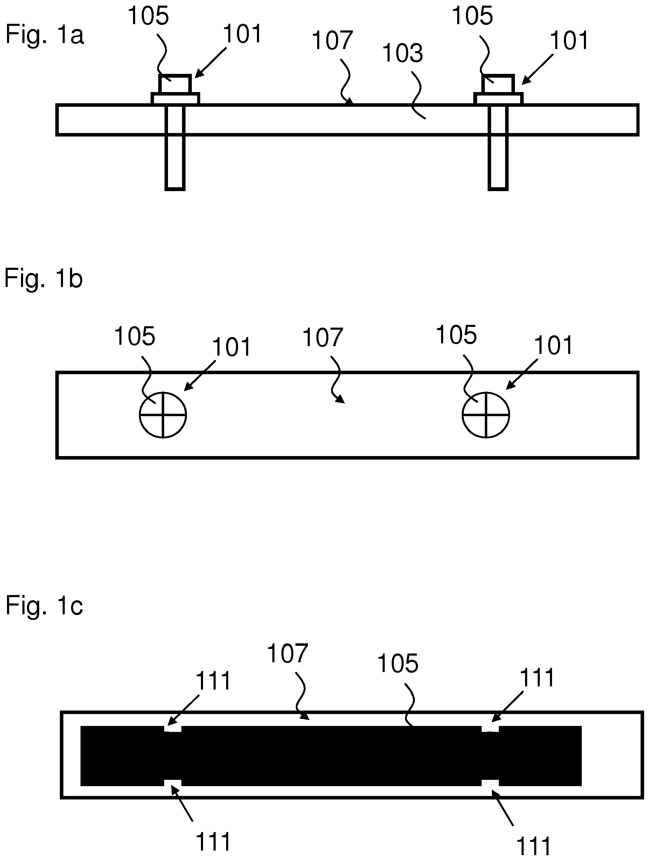

Fig. 1a zeigt schematisch eine Anordnung mit einer Schraubverbindung mit Schrauben 101 und einem Deckel 103. Die Schrauben 101 ragen durch den Deckel 103 hindurch. Die Schrauben weisen einen Schraubenkopf 105 auf, der auf einer Oberfläche 107 des Deckels aufliegt. Fig. 1b zeigt den Ausschnitt aus Fig.1a in einer anderen Perspektive.

Ein möglicher Ansatz, die Schrauben 101 abzudichten und gleichzeitig gegen Korrosion zu schützen, ist ein nachgelagerter Applikationsprozess, in dem ein Beschichtungsmaterial 109, insbesondere eine Kleb-/Dichtmasse, über die Schrauben 101 gesprüht wird.

Zum Abdichten von Schraubenköpfen 105 sind verschiedene Verfahren bekannt (siehe z.B. Dokument EP 2 842 457 A).

Eine davon ist der Auftrag einer Kleb-/Dichtmasse, also Klebmasse und/oder Dichtmasse, mit verschiedenen Techniken. Neben der schwierigen Prozesstechnik, Schrauben 101 ohne auch nur kleine Luftkanäle abzudecken, kann es zusätzlich Stunden dauern, bis das Beschichtungsmaterial 109 trocken ist, insbesondere kann es lange dauern, bis das Beschichtungsmaterial 109 ausgehärtet ist und eine Dichtprüfung stattfinden kann, insbesondere eine zerstörungsfreie Dichtprüfung. Diese reaktiven Kleb-/Dichtmassen können feuchtigkeitskontrolliert sein. Ein Trocknen, d.h. ein Aushärten, kann von Umgebungsbedingungen abhängig sein, beispielsweise im Sommer und im Winter unterschiedlich sein. Hitzereaktive Klebstoffe können mit einer externen Energiequelle aktiviert werden, die jedoch das Batteriesystem schädigen könnten. Bei der Beschichtung am realen Bauteil mit einer 3D-Struktur, verstärkt sich dieser Effekt. Es bilden sich Luftkanäle 111 bis zum Rand des Beschichtungsmaterials 109.

In Fig. 1c ist der Ausschnitt aus Fig. 1b dargestellt, mit dem Beschichtungsmaterial 109 über den Schrauben 101. Allerdings ändert sich das Verhalten, sobald sich in der Sprühbahn ein Schraubenkopf 105 befindet. Über den Schrauben 101 kann es zu Verwirbelungen und einem Ausreißen des Beschichtungsmaterials 109 mit einem seitlichen Aufwerfen kommen. Unter dem Beschichtungsmaterial 109, d.h. unter der Dichtmasse, bilden sich die Luftkanäle 111 von der Schraube 101 bis zum Rand des Beschichtungsmaterials 109. Im Fall einer undichten Schraube 101, kann dann Luft und/oder Wasser in den Batterieinnenraum eintreten.

Es ist eine Aufgabe der Erfindung, ein vorteilhaftes Konzept dichtenden Abdecken eines Schraubenkopfes aufzuzeigen.

Gemäß einem ersten Aspekt der Erfindung wird die Aufgabe durch ein Verfahren zum dichtenden Abdecken eines Schraubenkopfes einer Schraube gelöst, welche eine Werkstückoberfläche durchbricht, mit einem viskosen Beschichtungsmaterial, mit:
Auftragen einer ersten Bahn des viskosen Beschichtungsmaterials auf die Werkstückoberfläche unter einer ersten Neigung bezüglich der Werkstückoberfläche, wobei die erste Bahn des viskosen Beschichtungsmaterials nach dem Auftragen den Schraubenkopf allenfalls teilweise abdeckt; und
Auftragen einer zweiten Bahn des viskosen Beschichtungsmaterials auf die Werkstückoberfläche unter einer zweiten Neigung bezüglich der Werkstückoberfläche, wobei die zweite Bahn des viskosen Beschichtungsmaterials nach dem Auftragen die erste Bahn derart überlappt, sodass der Schraubenkopf vollständig abgedeckt ist; wobei
die erste Neigung und die zweite Neigung zueinander entgegengesetzt sind.

Das Verfahren dient zum dichtenden Abdecken des Schraubenkopfes mit dem viskosen Beschichtungsmaterial. D.h. das Verfahren dient zum dichtenden Abdecken einer metallischen Schnittstelle. Wurde die Schraube korrekt in das Werkstück eingedreht und schließt das Bohrloch hermetisch ab, wäre dieses Schraube luft- und tauchdicht. Weil sich während des Fahrbetriebes auf dem Werkstück Wasser und andere Flüssigkeiten bzw. Salze an der Schraube ablagern, kann es über die Zeit zur Korrosion kommen und Wasser könnte in das Werkstück eindringen. Das kann im schlimmsten Fall zu Schäden führen.

Als effektive Abdichtmethode hat sich ein anschließender Beschichtungsvorgang der freiliegenden Flächen und Schraubenköpfe mit Kleb-/ Dichtmasse erwiesen. So kann sich Wasser nicht ansammeln und Korrosion kann verhindert werden.

Durch das Verfahren kann eine vollständige Benetzung des Schraubenkopfes gewährleistet werden. Ein zweimaliges Beschichten unter Ausrichtung einer Düse in einem spezifischen Winkel kann für die Dichtigkeit vorteilhaft sein. Hierdurch kann eine tauchdichte Beschichtung auf einer metallischen Schnittstelle aufgetragen werden. Das Verfahren stellt einen schnellen Prozess dar, insbesondere vom Auftrag bis zur Dichtprüfung, und eine vorteilhafte Anbindung der Kleb-/Dichtmasse an die Schrauben. Es kann eine tauchdichte Beschichtung bereitgestellt werden, die durch Lage und Form der Beschichtung langzeitstabil und auf jedes Beschichtungsmaterial einstellbar ist.

Eine Nacharbeit der beschichteten Stelle kann reduziert werden, da beispielsweise weniger undichte Stellen erzeugt werden und so weniger nachträglicher Dichtungsbedarf besteht.

Es wird ein einfacher Aufbau und Prozessablauf für eine sichere Benetzung der Schraubenköpfe bereitgestellt. Das Verfahren ist auf eine Geometrie und Form des Werkstücks einstellbar.

Das Verfahren kann von einem Auftragsystem automatisch durchgeführt werden. Hierdurch kann eine Prozesssicherheit erhöht werden.

Das Auftragsystem kann ein Dosiersystem sein und unabhängig von der Viskosität des Beschichtungsmaterials einen gleichbleibenden, qualitativ hochwertigen Auftrag ermöglichen. Anstatt einer ganzflächigen Beschichtung wird der Auftrag auf zwei Bahnen verteilt.

Die zweite Bahn überlappt den ersten Auftrag und dichtet die Schraube von oben und seitlich durch den Spritzwinkel vollständig ab. Dies kann bei einer Betrachtung der Beschichtung der Fläche und der Schraube von unten, beispielsweise bei einer zerstörenden Dichteprüfung, überprüft werden.

Die Dichtigkeit wird nicht nur durch den Auftrag generiert. Die Kleb-/Dichtmasse muss mit dem Untergrund eine gute, insbesondere eine 100%ige, Haftung ausbilden. Die verwendete Kleb-/ Dichtmasse kann insbesondere mit dem Trägermaterial, d.h. dem Material des Werkstoffs, kompatibel sein.

Es kann zusätzlich ein Reinigen und/oder eine Vorbehandlung durchgeführt werden. Dies kann zeitlich vorgelagert oder inline zum Auftragen erfolgen.

In einer Ausgestaltung umfassen die Schritte des Auftragens ein kontinuierliches Verfahren einer Düse, die eingerichtet ist, das viskose Beschichtungsmaterial aufzusprühen.

Durch das kontinuierliche Verfahren der Düse kann ein gleichmäßiger Auftrag erfolgen.

In einer Ausgestaltung erfolgt das Auftragen der ersten Bahn und das Auftragen der zweiten Bahn bei entgegengesetzten Auftragrichtungen der Düse. D.h. das Auftragen der ersten Bahn erfolgt bei einer Vorwärtsbewegung der Düse und das Auftragen der zweiten Bahn erfolgt bei einer Rückwärtsbewegung der Düse.

Beide Bahnen können in dieselbe Richtung aufgetragen werden. Beide Bahnen können in entgegengesetzte Richtungen aufgetragen werden. Ein Auftrag in entgegengesetzte Richtungen kann effizienter sein.

In einer Ausgestaltung erfolgt das Auftragen der zweiten Bahn innerhalb einer Trockenzeit des viskosen Beschichtungsmaterials, insbesondere bevor sich eine Haut auf der ersten Bahn gebildet hat.

So kann eine gute Haftung des viskosen Beschichtungsmaterials, das mit der zweiten Bahn aufgetragen wird, auf dem viskosen Beschichtungsmaterial der ersten Bahn erfolgen.

In einer Ausgestaltung ist das Werkstück ein Batteriegehäuse. Insbesondere weist das Batteriegehäuse Batteriemodule für ein Fahrzeug auf, die in dem Batteriegehäuse angeordnet sind.

Das Werkstück kann ein Batterierahmen mit einem verschraubten Metalldeckel sein. Batteriegehäuse können in einem Produktionsprozess verwendet werden. Durch das effiziente Verfahren wird der Produktionsprozess nicht ausgebremst.

In einer Ausgestaltung betragen die erste Neigung und die zweite Neigung je 5° aus einer orthogonalen Ausrichtung gegenüber der Werkstückoberfläche.

Die Winkel bei der ersten Bahn und der zweiten Bahn sind entgegengesetzt, insbesondere +5° und -5° aus der Orthogonalen bezogen auf die Werkstückoberfläche. Das heißt, die Neigungen entsprechen hierbei 85° und 95° von der Werkstückoberfläche aus gesehen. In einer weiteren Ausgestaltung variieren die Neigungen zueinander, beispielsweise ist die erste Neigung 5° aus der Orthogonalen bezogen auf die Werkstückoberfläche und die zweite Neigung 10° aus der Orthogonalen bezogen auf die Werkstückoberfläche, entgegengesetzt zu der ersten Neigung.

In einer Ausgestaltung umfasst die teilweise Bedeckung beim Auftragen der ersten Bahn wenigstens 50% der Oberfläche des Schraubenkopfes, insbesondere bis zu 60% der Oberfläche des Schraubenkopfes.

Das heißt, die erste Bahn kann zu maximal 50-60% über den Schraubenkopf gesprüht werden. Durch den Neigungswinkel von mindestens 5° bezogen auf die Orthogonale zur Werkstückoberfläche werden die Seitenflächen vollständig bedeckt.

In einer Ausgestaltung umfasst beim Auftragen der zweiten Bahn die Überlappung wenigstens 10% der ersten Bahn.

Bei einer solchen Überlappung kann eine Dichtigkeit zwischen den beiden Bahnen größer sein, als bei einer geringeren Überlappung, da Toleranzen besser ausgeglichen werden können.

In einer Ausgestaltung umfasst das Verfahren ein Bereitstellen des viskosen Beschichtungsmaterials, insbesondere Bereitstellen eines Zweikomponentenmaterials als viskoses Beschichtungsmaterial.

Für ein schnelles Aushärten kann ein Booster oder ein Zweikomponentenprodukt verwendet werden. Beispielsweise erfolgt im Prozessablauf der Batteriefertigung nach dem sogenannten Assembly der Hardware ein Dichtigkeitstest, der mit Unterdruck oder Überdruck erfolgen kann. Damit dieser Dichtigkeitstest im Takt des Produktionsprozesses erfolgen kann, muss die Kleb-/Dichtmasse bereits soweit ausreagiert sein, dass durch die Druckprüfung keine Zerstörung der Beschichtung erfolgt. Der Booster kann bei der Feinnahtabdichtung eingesetzt werden, insbesondere zur beschleunigten Aushärtung. Die beiden Komponenten können TEROSON MS 9320 SF und als Booster 9371 B WH sein.

Durch den Booster kann beispielsweise bereits nach 42 min auf Dichtigkeit geprüft werden. Bei dem Zweikomponentenmaterial kann es sich um nassen Ruß handeln oder um ein anderes Material, insbesondere eine rußfreie Rezeptur, die an Stelle von Wasser eine -OHhaltige Verbindung in Form von Ethan-1,2-diol enthält.

Nach erfolgter Hautbildung einer nicht beschleunigten Dichtmasse kann bei der Überdruckprüfung die Beschichtung zerstört werden, weil die Luft sich in die Beschichtung drücken und zu einer defekten Dichtungsnaht führen kann. Eine schnelle Aushärtung durch das Zweikomponentenprodukt kann zu einer vollständigen Aushärtung bis zur Dichteprüfung führen. Alternativ kann das Material auch so gewählt werden, dass eine Dichteprüfung vor einer Hautbildung erfolgen kann.

Ein Zweikomponenten-Dosiersystem mit statischem Mischrohr kann vor einem Auftragskopf mit einer sogenannten FlatStream-Düse installiert werden. So kann die Aushärtezeit von Stunden auf Minuten reduzieren werden.

Es wird eine Beschichtung mit beschleunigter Aushärtung bis zur Dichteprüfung bereitgestellt, die eine flexible Technologie für jede Art der Abdichtung möglich macht. Weitere Vorteile sind eine Reduktion der Prozessdauer im Vergleich zu einem Auftrag mit einem Beschichtungsmaterial, das nur eine Komponente aufweist. So können auch Stillstandplätze reduziert werden. Zusätzlich müssen die Batterien aufgrund der schnellen Trockenzeit des Zweikomponentenmaterials nicht zwischengelagert werden, da die Durchhärtung nicht über Stunden andauert.

In einer Ausgestaltung umfasst das Verfahren ein optisches Erfassen des Auftragens, insbesondere durch eine Kamera, und Korrigieren des Auftragens, wenn erfasst wird, dass das Auftragen von einer Sollbahn abweicht. Die Sollbahn kann eine vorprogrammierte Bahn sein oder eine Bahn sein, die von einer Steuerung aufgrund mit der Kamera und erfasster Schraubenköpfe in Auftragrichtung vor dem Auftragkopf ermittelt wird.

Hierdurch kann ein Toleranzausgleich gewährleistet werden. Das Auftragen kann durch eine Kamera geführt sein. Ein erfolgreicher Beschichtungsauftrag kann zusätzlich mit Prozesskameras verfolgt werden. Prozessparameter des Beschichtungsauftrages beeinflussen ebenfalls die Haftung und damit die Dichtigkeit.

In einer Ausgestaltung umfasst das Verfahren ein Festlegen einer Auftragbahn, wobei die Auftragbahn eine Länge aufweist, wobei beim Festlegen der Auftragbahn eine Trocknungszeit des viskosen Beschichtungsmaterials und eine Auftraggeschwindigkeit berücksichtigt werden.

Die Programmierung vom Anfang und Ende der Bahnen hat einen Einfluss auf die Beschichtung. Insbesondere kann eine Länge der ersten Bahn und der zweiten Bahn basierend auf der Trocknungszeit des viskosen Beschichtungsmaterials und eine Aufraggeschwindigkeit ermittelt werden. So kann eine zu lange Beschichtungsdistanz auf mehrere kürzere Bahnen aufgeteilt werden.

Gemäß einem zweiten Aspekt wird die Aufgabe durch ein Auftragsystem zum dichtenden Abdecken eines Schraubenkopfes einer Schraube gelöst, welche eine Werkstückoberfläche durchbricht, mit einem viskosen Beschichtungsmaterial, mit einem Auftragkopf, der eingerichtet ist, das viskose Beschichtungsmaterial auf die Werkstückoberfläche in einer ersten Bahn unter einer ersten Neigung bezüglich der Werkstückoberfläche und in einer zweiten Bahn unter einer zweiten Neigung bezüglich der Werkstückoberfläche aufzutragen, wobei die erste Neigung und die zweite Neigung zueinander entgegengesetzt sind; und einer Steuerung, die eingerichtet ist, die erste Neigung und die zweite Neigung einzustellen und den Auftragkopf anzusteuern, sodass beim Auftragen der ersten Bahn des viskosen Beschichtungsmaterials auf die Werkstückoberfläche der Schraubenkopf allenfalls teilweise abgedeckt wird und beim Auftragen der zweiten Bahn des viskosen Beschichtungsmaterials auf die Werkstückoberfläche die zweite Bahn des viskosen Beschichtungsmaterials nach dem Auftragen die erste Bahn derart überlappt, dass der Schraubenkopf vollständig abgedeckt ist.

Die erste Bahn kann so programmiert werden, dass der Schraubenkopf nicht vollständig abgedeckt wird. Die zweite Bahn kann so programmiert werden, um alles zu überdecken. Die Gesamtbreite des Auftrags kann so gewählt werden, dass jegliche Toleranz der Schrauben und Auftragsprobleme beim Auftragen abgefangen werden. Beispielsweise kann ein Überlappen prozentual zur ersten Bahn erfolgen oder die zweite Bahn kann über die gesamte Breite des viskosen Beschichtungsmaterials und/oder des Schraubenkopfes erfolgen.

Durch den Aufbau einer solchen neuen Misch- und Dosiertechnik ist es technisch möglich, einen Statikmischer und eine FlatStream-Auftragseinheit zu kombinieren. Eine Düsengeometrie kann entsprechend angepasst sein. Bei sogenannten Airless-Düsen kann der Druck nach dem Statikmischer so niedrig sein, dass man das Gemisch nicht mehr sprühen kann. Das Auftragsystem kann einen Sprüh- und Beschichtungsauftrag auftragen, bei dem vor dem Sprühen das Produkt über ein statisches Mischrohr gemischt und das gemischte Zweikomponentenmaterial direkt versprüht wird. Dieser hochviskose Dichtstoff kann mittels Flat Stream aufgesprüht werden. Hierbei können ein Mischen und ein Auftragen mittels Flat Stream von niedrig- und hochviskosen Kleb- und Dichtstoffen realisiert werden. Mit dem Auftragsystem wird ein Abdichten und Schützen von Schrauben durch einen zweifachen Auftrag mittels zweier Sprühbahnen unter verschiedenen Auftragswinkeln realisiert.

Die benötigte Durchhärtung kann man durch das Zumischen von einer zweiten Komponente, beispielsweise einem Booster oder Isocyant, und Wärme erhalten. Durch Erwärmen der Komponenten lässt sich die Reaktionsgeschwindigkeit steuern. Sprüheigenschaften und die daraus resultierende Dichtheit der Schrauben innerhalb einer festgelegten Zeit können temperaturabhängig sein. Die Steuerung kann eingerichtet sein, die Temperatur zu regeln, insbesondere die Temperatur des viskosen Beschichtungsmaterials und/oder der Düse zu regeln.

Die Umsetzung dieses Beschichtungsverfahren in Kombination mit dem zweifachen Auftragen kann in Abhängigkeit von der Taktzeit des Fertigungsprozesses erfolgen. Damit ist es beispielsweise möglich, luft- und tauchdichte Batterien mit einer Prozesszeit unter 60 min herzustellen.

In einer Ausgestaltung umfasst der Auftragkopf eine Düse und zwei Anschlüsse, wobei die zwei Anschlüsse an verschiedene Behälter anschließbar und eingerichtet sind, zwei Komponenten eines Zweikomponentenmaterials zu der Düse zu fördern.

Die Düse kann hierbei eine Schraubenstruktur umfassen, die zu einer homogenen Mischung beitragen kann.

In einer Ausgestaltung ist die Steuerung eingerichtet, die erste Neigung und die zweite Neigung auf ein Lot auf die Werkstückoberfläche zu beziehen. Das heißt, die Steuerung ermittelt die Neigungen basierend auf einer orthogonalen Grundausrichtung der Düse. Das Lot entspricht der Orthogonalen zu der Werkstückoberfläche.

In einer Ausgestaltung ist die Steuerung eingerichtet, eine Länge der ersten Bahn in Abhängigkeit einer Trockenzeit des viskosen Beschichtungsmaterials und einer Geschwindigkeit des Auftragkopfs zu bestimmen.

Das Auftragen kann beispielsweise mittels eines Verfahrens, wie z. B. FlatStream, Airless, E-Swirl, erfolgen. Bei der Entwicklung der Beschichtung mit FlatStream und einer geeigneten Düse, kann ein gutes und homogenes, geschlossenes Sprühbild auf einer flachen Ebene erreicht werden. Das Material kann so gewählt werden, dass es an den Rändern der ersten Bahn bzw. der zweiten Bahn nicht verfließt, sondern sich auffaltet. Rheologische Anpassungen sind hierbei möglich.

Im Folgenden wird die Erfindung anhand von Ausführungsbeispielen und den Figuren näher beschrieben. In den Figuren zeigen:
- Fig. 1a: eine schematische Darstellung einer Anordnung;
- Fig. 1b: eine weitere schematische Darstellung der Anordnung gemäß Fig. 1a;
- Fig. 1c: eine schematische Darstellung einer Anordnung gemäß Fig. 1b mit einer Beschichtung;
- Fig. 2a: eine schematische Darstellung einer Anordnung mit einem Auftragsystem gemäß einem Ausführungsbeispiel;
- Fig. 2b: eine weitere schematische Darstellung der Anordnung aus Fig. 2a;
- Fig. 3a: eine schematische Darstellung einer Anordnung gemäß einem Ausführungsbeispiel;
- Fig. 3b: eine weitere schematische Darstellung der Anordnung gemäß Fig. 3a;
- Fig. 3c: eine weitere schematische Darstellung der Anordnung gemäß Fig. 3b; und
- Fig. 4: ein Flussdiagramm für ein Verfahren gemäß einem Ausführungsbeispiel.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

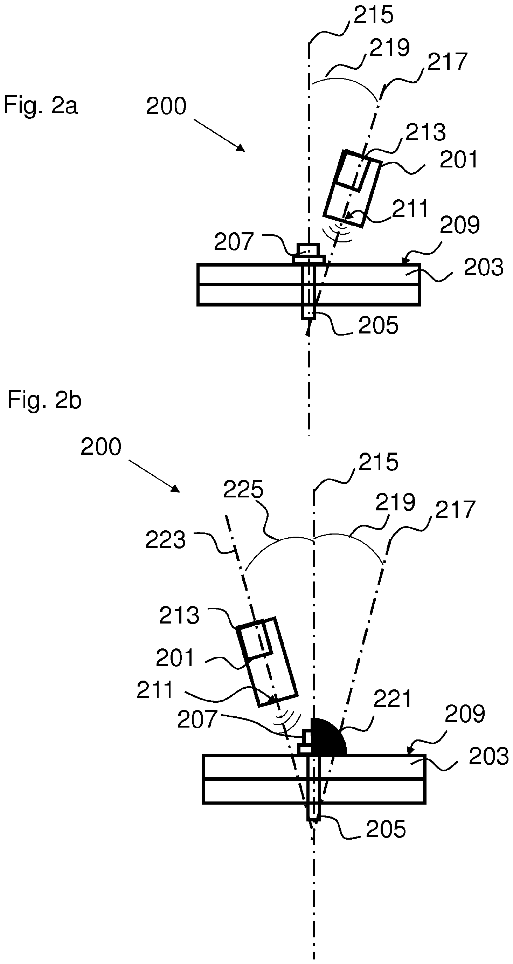

Fig. 2a zeigt eine schematische Darstellung einer Anordnung 200 mit einem Auftragsystem 201 gemäß einem Ausführungsbeispiel. Die Anordnung 200 zeigt ein Werkstück 203 mit einer Schraube 205, die einen Schraubenkopf 207 aufweist. Der Schraubenkopf 207 liegt im Wesentlichen auf einer Werkstückoberfläche 209 auf. Jedoch kann es bei einer solchen Verbindung vorkommen, dass beispielsweise aufgrund von Toleranzen, das Aufliegen des Schraubenkopfes 207 auf der Werkstückoberfläche 209 nicht vollständig erfolgt und/ oder die Schraube 205 nicht sicher abdichtet. Hierbei könnte Feuchtigkeit durch das Werkstück 203 dringen. Das Werkstück 203 ist hierbei ein Gehäuse einer Batterie. In einem weiteren Ausführungsbeispiel ist das Werkstück 203 ein anderes Gehäuse, das insbesondere vor Feuchtigkeit schützen soll. Das Werkstück 203 kann eine abzudichtende Strecke von beispielsweise 11m Länge aufweisen, die sich aus mehreren Einzelstrecken ergibt, die an einem Rand um das Gehäuse angeordnet sind. Die Batterie kann beispielsweise 1,2 m Breite und 2,3m Länge bei 15 cm Dicke aufweisen. In weiteren Ausführungsbeispielen können die Werte abweichen.

Das Auftragsystem 201 umfasst eine Düse 211 und eine Steuerung 213. Die Düse 211 ist eingerichtet, ein Zweikomponentenmaterial zu mischen und auszusprühen und hierdurch auf dem Werkstück 203 aufzutragen. Die Steuerung 213 ist eingerichtet die Düse 211 zu regeln und eine Bewegung der Düse 211 zu steuern. Im gezeigten Ausführungsbeispiel ist das Auftragsystem 201 bewegbar. In einem weiteren Ausführungsbeispiel ist die Düse 211 bewegbar und die Steuerung 213 nicht. Hierbei kann die Steuerung 213 zentral angeordnet und insbesondere in ein Computersystem integriert sein.

Die Düse 211 kann eine flache Düse sein, um einen flachen Sprühstrom zu erzeugen, einen FlatStream. Die Düse 211 kann insbesondere einen 3 mm dicken Spalt von 1 cm Länge aufweisen. Hierdurch kann ein Zweikomponentenmaterial mit ca. 100 bar eingebracht werden. Die Düse 211 weist ein schraubenförmiges Mischrohr, eine Wendel zum Mischen mit insbesondere 24 Windungen, auf, an dessen Ende immer noch ein Druck von ca. 30 bis 40 bar anliegt.

In Fig. 2a ist eine Orthogonale 215 zu der Werkstückoberfläche 209 eingezeichnet und eine erste Neigung 217, die zu der Orthogonalen 215 in einem ersten Winkel 219 steht. Der erste Winkel 219 beträgt hierbei 5°. In einem weiteren Ausführungsbeispiel beträgt der erste Winkel 219 einen anderen Wert, insbesondere mehr als 5° zu der Orthogonalen 215. Das Auftragsystem 201 kann ein viskoses Beschichtungsmaterial in dem ersten Winkel 219 auftragen, d.h. seitlich an den Schraubenkopf 207 aufsprühen. Hierbei wird eine erste Bahn gebildet, insbesondere bei einer Vorwärtsbewegung der Düse 211.

Fig. 2b zeigt ebenso wie zu Fig. 2a beschrieben die Anordnung 200 mit dem Werkstück 203 und dem Auftragsystem 201. Hierbei wurde ein viskoses Beschichtungsmaterial 221 bei der Vorwärtsbewegung als erste Bahn aufgebracht. Die erste Bahn des viskosen Beschichtungsmaterials 221 bedeckt den Schraubenkopf 207 zu 50%. In einem weiteren Ausführungsbeispiel ist die Bedeckung mehr oder weniger, insbesondere zwischen 50% und 60% der Oberfläche des Schraubenkopfes 207.

Die Düse 211 ist hierbei in einer zweiten Neigung 223 geneigt, also in einem zweiten Winkel 225 zu der Orthogonalen bezüglich der Werkstückoberfläche 209 angeordnet. Der zweite Winkel 225 beträgt ebenfalls 5°. In einem weiteren Ausführungsbeispiel weist der zweite Winkel 225 einen anderen Wert auf, insbesondere einen anderen Wert als der erste Winkel 219, weiter insbesondere einen kleineren Wert als der erste Winkel 219. Die zweite Neigung 223 ist bezüglich der Orthogonalen 215 zu der Werkstückoberfläche 209 auf einer der ersten Neigung 217 entgegengesetzten Seite angeordnet, bezüglich einer Auftragrichtung. So kann beim zweiten Auftragen des viskosen Beschichtungsmaterials 221 der Rest des Schraubenkopfes 207 vollständig bedeckt werden.

In einem weiteren Ausführungsbeispiel beträgt der erste Winkel 219 und/oder der zweite Winkel 225 0°. Dies ist insbesondere von einer Bauteilzugänglichkeit abhängig. Ist beispielsweise ein Neigen der Düse 211 von 5° beim Auftragen der zweiten Bahn nicht möglich, weil Bauteile des Werkstücks 203 im Weg sind, so kann der Auftrag auch teilweise unter einem Winkel von 0° erfolgen. Unabhängig von der Neigung beim Auftragen der ersten Bahn, wird beim Auftragen der ersten Bahn der Schraubenkopf 207 allenfalls teilweise abdeckt und durch das Auftragen der zweiten Bahn der Schraubenkopf 207 vollständig abgedeckt.

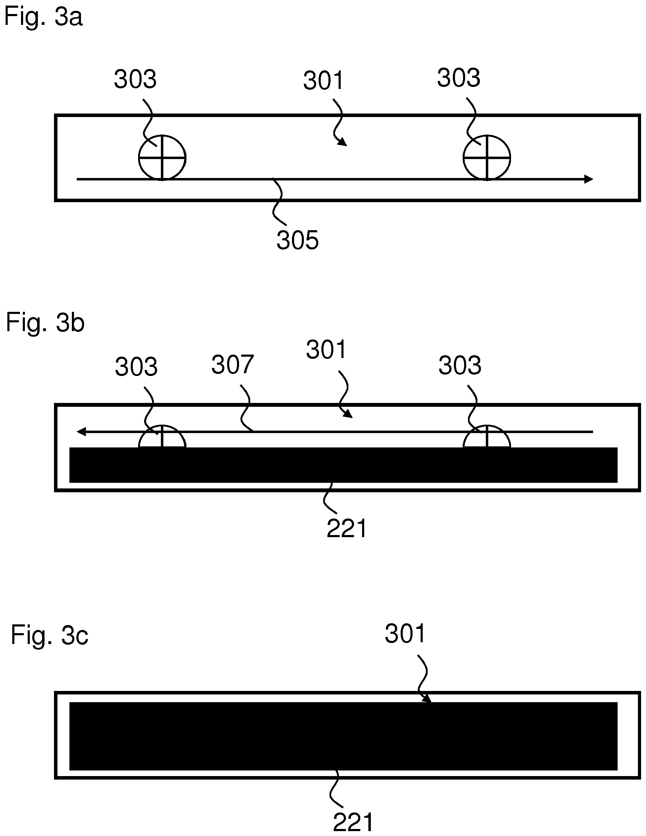

Fig. 3a zeigt ein Werkstück 301 mit zwei Schraubenköpfen 303. Es ist mit einem Pfeil 305 eine erste Richtung eingezeichnet, entlang der die erste Bahn beschichtet werden soll.

Fig. 3b zeigt den Zustand des Werkstücks 301 mit den zwei Schraubenköpfen 303 nach dem ersten Auftragen des viskosen Beschichtungsmaterials 221 als erste Bahn. Die Schraubenköpfe 303 sind zur Hälfte bedeckt. Es ist mit einem Pfeil 307 eine zweite Richtung eingezeichnet, entlang der die zweite Bahn beschichtet werden soll.

Fig. 3c zeigt den Zustand des Werkstücks 301 mit den zwei Schraubenköpfen 303 nach dem ersten Auftragen des viskosen Beschichtungsmaterials 221 als zweite Bahn. Die Schraubenköpfe 303 sind vollständig bedeckt. Insbesondere ist im Bereich der Schraubenköpfe 303 ebenso ein gleichmäßiger Auftrag des viskosen Beschichtungsmaterials 221 erfolgt, wie zwischen den Schraubenköpfen 303.

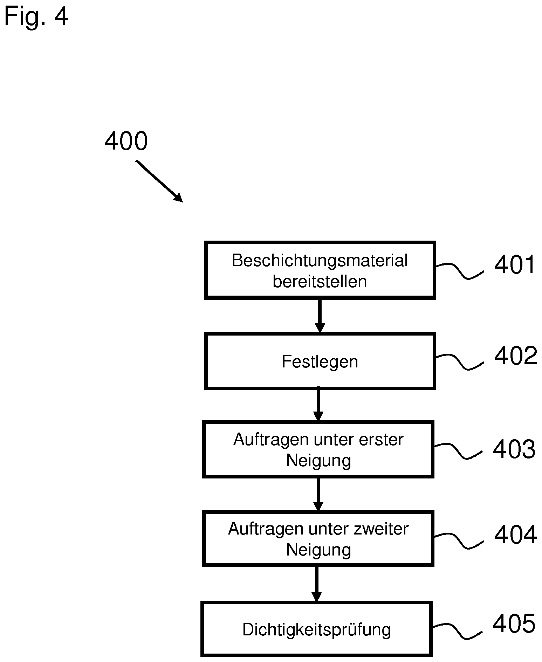

Fig. 4 zeigt ein Flussdiagramm 400 für ein Verfahren gemäß einem Ausführungsbeispiel.

In einem Schritt 401 wird ein viskoses Beschichtungsmaterial 221 bereitgestellt. Hierbei wird ein Zweikomponentenmaterial bereitgestellt, insbesondere in zwei getrennten Behältern, die durch Zuleitungen mit der Düse 211 verbunden sind. Die Düse 211 umfasst eine Schraubenstruktur, die ein gleichmäßiges Mischen der zwei Komponenten ermöglicht. In einem weiteren Ausführungsbeispiel wird ein viskoses Beschichtungsmaterial 221 bestehend aus einer Komponente verwendet.

In einem Schritt 402 wird eine Auftragbahn festgelegt. Hierbei kann in der Steuerung 213 ein Weg über Koordinaten und/oder Vektoren für die Düse 211 des Auftragsystems 201 festgelegt werden. Dies kann für jedes zu beschichtende Werkstück 203 separat erfolgen. In einem weiteren Ausführungsbeispiel wird die Auftragbahn von der Steuerung 213 auf Basis von Kameradaten ermittelt, die ein Auswerten von erkannten Schraubenköpfen 303 umfasst.

In allen Fällen kann durch einen Abgleich der programmierten ersten Bahn und der programmierten zweiten Bahn mit Kameradaten ein Abweichen von der jeweiligen Bahn beim Auftragen, d.h. beim Abfahren der ersten Bahn oder der zweiten Bahn, erkannt und korrigiert werden. In einem weiteren Ausführungsbeispiel wird hierauf verzichtet. Hierbei können Toleranzen größer gewählt werden, d.h. der Auftrag der ersten Bahn und/oder der Auftrag der zweiten Bahn kann breiter erfolgen.

In einem Schritt 403 wird das viskose Beschichtungsmaterial 221 als erste Bahn mit der ersten Neigung 217 aufgetragen. Hierbei werden die Schraubenköpfe 303 allenfalls teilweise, insbesondere zu 50% bis zu 60%, von dem viskosen Beschichtungsmaterial 221 bedeckt. Die Auftragrichtung erfolgt hierbei in einer Vorwärtsbewegung der Düse 211.

In einem Schritt 404 wird das viskose Beschichtungsmaterial 221 als zweite Bahn mit der zweiten Neigung 223 aufgetragen. Hierbei werden die Schraubenköpfe 303 vollständig von dem viskosen Beschichtungsmaterial 221 bedeckt. Das heißt, der Rest des Schraubenkopfes 303, der von der ersten Bahn viskosen Beschichtungsmaterials 221 nicht bedeckt ist, wird bedeckt. Hierbei überlappt insbesondere die erste Bahn mit der zweiten Bahn. Die Auftragrichtung erfolgt hierbei in einer Rückwärtsbewegung der Düse 211, die entgegengesetzt zu der Vorwärtsbewegung verläuft. In einem weiteren Ausführungsbeispiel erfolgen der Auftrag der ersten Bahn und der Auftrag der zweiten Bahn in der gleichen Richtung. Insbesondere dauert das Auftragen in Schritt 403 und das Aufragen in Schritt 404 jeweils 30 sec. In einem weiteren Ausführungsbeispiel ist die Zeit abweichend. Dies kann von der Steuerung 213 auf Basis der Trockenzeit des viskosen Beschichtungsmaterials 221 und der Auftraggeschwindigkeit, d.h. der Geschwindigkeit, mit der die Düse 211 bewegbar ist, bestimmt werden. Somit hat sich noch keine Haut auf der ersten Bahn gebildet, wenn die zweite Bahn über die erste Bahn gesprüht wird und die erste Bahn und die zweite Bahn können sich miteinander vermischen.

Das Auftragen in den Schritten 403 und 404 kann durch eine Kamera erfasst und ausgewertet werden. Hierbei können auf Fehler und Toleranzen reagiert werden. D.h., die Steuerung 213 kann die Düse 211 entsprechend regeln, um einen Ausgleich zu erreichen und einen gelichmäßigen Auftrag zu ermöglichen.

In einem Schritt 405 wird die Dichtigkeit des Auftrags überprüft. Hierzu wird ein Überdruck an dem Werkstück 203 mit dem aufgetragenen viskosen Beschichtungsmaterial 221 angelegt. Hält der Druck eine vorbestimmte Zeit den gleichen Wert, so ist die Verbindung dicht. In einem weiteren Ausführungsbeispiel wird ein Unterdruck angelegt.

### Bezugszeichenliste

- 101,205: Schraube
- 103: Deckel
- 105, 207, 303: Schraubenkopf
- 107: Oberfläche
- 109: Beschichtungsmaterial
- 111: Luftkanal
- 200: Anordnung
- 201: Auftragsystem
- 203, 301: Werkstück
- 209: Werkstückoberfläche
- 211: Düse
- 213: Steuerung
- 215: Orthogonale
- 217: erste Neigung
- 219: erster Winkel
- 221: Beschichtungsmaterial
- 223: zweite Neigung
- 225: zweiter Winkel
- 305, 307: Pfeil
- 400: Flussdiagramm
- 401 - 405: Verfahrensschritt

## Patentansprüche

1. Verfahren zum dichtenden Abdecken eines Schraubenkopfes (207, 303) einer Schraube (205), welche eine Werkstückoberfläche (209) durchbricht, mit einem viskosen Beschichtungsmaterial (221), **gekennzeichnet durch** folgende Schritte:
Auftragen (403) einer ersten Bahn des viskosen Beschichtungsmaterials (221) auf die Werkstückoberfläche (209) unter einer ersten Neigung (217) bezüglich der Werkstückoberfläche (209), wobei die erste Bahn des viskosen Beschichtungsmaterials (221) nach dem Auftragen (403) den Schraubenkopf (207, 303) allenfalls teilweise abdeckt; und
Auftragen (404) einer zweiten Bahn des viskosen Beschichtungsmaterials (221) auf die Werkstückoberfläche (209) unter einer zweiten Neigung (223) bezüglich der Werkstückoberfläche (209), wobei die zweite Bahn des viskosen Beschichtungsmaterials (221) nach dem Auftragen (404) die erste Bahn derart überlappt, dass der Schraubenkopf (207, 303) vollständig abgedeckt ist; wobei
die erste Neigung (217) und die zweite Neigung (223) zueinander entgegengesetzt sind.

2. Verfahren nach Anspruch 1, wobei die Schritte des Auftragens (403, 404) ein kontinuierliches Verfahren einer Düse (211) umfassen, die eingerichtet ist, das viskose Beschichtungsmaterial (221) aufzusprühen.

3. Verfahren nach Anspruch 2, wobei das Auftragen (403) der ersten Bahn und das Auftragen (404) der zweiten Bahn bei entgegengesetzten Auftragrichtungen der Düse (211) erfolgt.

4. Verfahren nach einem der vorstehenden Ansprüche, wobei das Auftragen (404) der zweiten Bahn innerhalb einer Trockenzeit des viskosen Beschichtungsmaterials (221) erfolgt, insbesondere bevor sich eine Haut auf der ersten Bahn gebildet hat.

5. Verfahren nach einem der vorstehenden Ansprüche, wobei das Werkstück (203) ein Batteriegehäuse ist, insbesondere mit Batteriemodulen für ein Fahrzeug, die in dem Batteriegehäuse angeordnet sind.

6. Verfahren nach einem der vorstehenden Ansprüche, wobei die erste Neigung (217) und die zweite Neigung (223) je 5° aus einer orthogonalen (215) Ausrichtung gegenüber der Werkstückoberfläche (209) betragen.

7. Verfahren nach einem der vorstehenden Ansprüche, wobei die teilweise Bedeckung beim Auftragen (403) der ersten Bahn wenigstens 50% der Oberfläche des Schraubenkopfes (207, 303), insbesondere bis zu 60% der Oberfläche des Schraubenkopfes (207, 303), umfasst.

8. Verfahren nach einem der vorstehenden Ansprüche, wobei beim Auftragen (404) der zweiten Bahn die Überlappung wenigstens 10% der ersten Bahn umfasst.

9. Verfahren nach einem der vorstehenden Ansprüche, umfassend ein Bereitstellen (401) des viskosen Beschichtungsmaterials (221), insbesondere Bereitstellen eines Zweikomponentenmaterials als viskoses Beschichtungsmaterial (221).

10. Verfahren nach einem der vorstehenden Ansprüche, umfassend ein optisches Erfassen des Auftragens (403, 404), insbesondere durch eine Kamera, und Korrigieren des Auftragens (403, 404), wenn erfasst wird, dass das Auftragen (403, 404) von einer Sollbahn abweicht.

11. Verfahren nach einem der vorstehenden Ansprüche, umfassend ein Festlegen (402) einer Auftragbahn, wobei die Auftragbahn eine Länge aufweist, wobei beim Festlegen der Auftragbahn eine Trocknungszeit des viskosen Beschichtungsmaterials (221) und eine Aufraggeschwindigkeit berücksichtigt werden.

12. Auftragsystem (201) zum dichtenden Abdecken eines Schraubenkopfes (207, 303) einer Schraube (205), welche eine Werkstückoberfläche (209) durchbricht, mit einem viskosen Beschichtungsmaterial (221), mit:
einem Auftragkopf, der eingerichtet ist, das viskose Beschichtungsmaterial (221) auf die Werkstückoberfläche (209) in einer ersten Bahn unter einer ersten Neigung (217) bezüglich der Werkstückoberfläche (209) und in einer zweiten Bahn unter einer zweiten Neigung (223) bezüglich der Werkstückoberfläche (209) aufzutragen, wobei die erste Neigung (217) und die zweite Neigung (223) zueinander entgegengesetzt sind; und
einer Steuerung (213), die eingerichtet ist, die erste Neigung (217) und die zweite Neigung (223) einzustellen und den Auftragkopf anzusteuern, sodass beim Auftragen (403) der ersten Bahn des viskosen Beschichtungsmaterials (221) auf die Werkstückoberfläche (209) der Schraubenkopf (207, 303) allenfalls teilweise abgedeckt wird und beim Auftragen (404) der zweiten Bahn des viskosen Beschichtungsmaterials (221) auf die Werkstückoberfläche (209) die zweite Bahn des viskosen Beschichtungsmaterials (221) nach dem Auftragen (403, 404) die erste Bahn derart überlappt, dass der Schraubenkopf (207, 303) vollständig abgedeckt ist.

13. Auftragsystem (201) nach Anspruch 12, wobei der Auftragkopf eine Düse (211) und zwei Anschlüsse umfasst, wobei die zwei Anschlüsse an verschiedene Behälter anschließbar und eingerichtet sind, zwei Komponenten eines Zweikomponentenmaterials zu der Düse (211) zu fördern.

14. Auftragsystem (201) nach einem der Ansprüche 12 oder 13, wobei die Steuerung (213) eingerichtet ist, die erste Neigung (217) und die zweite Neigung (223) auf ein Lot auf die Werkstückoberfläche (209) zu beziehen.

15. Auftragsystem nach einem der Ansprüche 12 bis 14, wobei die Steuerung (213) eingerichtet ist, eine Länge der ersten Bahn in Abhängigkeit einer Trockenzeit des viskosen Beschichtungsmaterials (221) und einer Geschwindigkeit des Auftragkopfs zu bestimmen.

## Claims

1. Method for covering a screw head (207, 303) of a screw (205) with a viscous coating material (221) in a leaktight manner, said screw (205) penetrating a workpiece surface (209), **characterized by** the following steps:
applying (403) a first web of the viscous coating material (221) to the workpiece surface (209) at a first inclination (217) with respect to the workpiece surface (209), wherein the first web of the viscous coating material (221) partially covers the screw head (207, 303) in any case after the applying operation (403); and
applying (404) a second web of the viscous coating material (221) to the workpiece surface (209) at a second inclination (223) with respect to the workpiece surface (209), wherein the second web of the viscous coating material (221) overlaps the first web after the applying operation (404) in such a way that the screw head (207, 303) is completely covered; wherein
the first inclination (217) and the second inclination (223) are mutually opposite.

2. Method according to Claim 1, wherein the applying steps (403, 404) comprise continuously moving a nozzle (211), which is configured to spray on the viscous coating material (221).

3. Method according to Claim 2, wherein the applying (403) of the first web and the applying (404) of the second web take place in opposite application directions of the nozzle (211).

4. Method according to one of the preceding claims, wherein the applying (404) of the second web takes place within a drying time for the viscous coating material (221), in particular before a skin has formed on the first web.

5. Method according to one of the preceding claims, wherein the workpiece (203) is a battery housing, in particular with battery modules for a vehicle which are arranged in the battery housing.

6. Method according to one of the preceding claims, wherein the first inclination (217) and the second inclination (223) each amount to 5° from an orthogonal (215) alignment in relation to the workpiece surface (209) .

7. Method according to one of the preceding claims, wherein the partial covering during the applying (403) of the first web encompasses at least 50% of the surface of the screw head (207, 303), in particular up to 60% of the surface of the screw head (207, 303).

8. Method according to one of the preceding claims, wherein, during the applying (404) of the second web, the overlap encompasses at least 10% of the first web.

9. Method according to one of the preceding claims, comprising providing (401) the viscous coating material (221), in particular providing a two-component material as viscous coating material (221).

10. Method according to one of the preceding claims, comprising optically detecting the applying operation (403, 404), in particular using a camera, and correcting the applying operation (403, 404) if it is detected that the applying operation (403, 404) deviates from an intended path.

11. Method according to one of the preceding claims, comprising establishing (402) an application path, wherein the application path has a length, wherein a drying time for the viscous coating material (221) and an application speed are taken into account for establishing the application path.

12. Application system (201) for covering a screw head (207, 303) of a screw (205) with a viscous coating material (221) in a leaktight manner, said screw (205) penetrating a workpiece surface (209), having:
an application head, which is configured to apply the viscous coating material (221) to the workpiece surface (209) in a first web at a first inclination (217) with respect to the workpiece surface (209) and in a second web at a second inclination (223) with respect to the workpiece surface (209), wherein the first inclination (217) and the second inclination (223) are mutually opposite; and
a controller (213), which is configured to set the first inclination (217) and the second inclination (223) and to actuate the application head such that, during the applying (403) of the first web of the viscous coating material (221) to the workpiece surface (209), the screw head (207, 303) is partially covered in any case and, during the applying (404) of the second web of viscous coating material (221) to the workpiece surface (209), the second web of the viscous coating material (221) overlaps the first web after the applying operation (403, 404) in such a way that the screw head (207, 303) is completely covered.

13. Application system (201) according to Claim 12, wherein the application head comprises a nozzle (211) and two connections, wherein the two connections can be connected to various containers and are configured to deliver two components of a two-component material to the nozzle (211).

14. Application system (201) according to either of Claims 12 and 13, wherein the controller (213) is configured to relate the first inclination (217) and the second inclination (223) to a perpendicular to the workpiece surface (209).

15. Application system according to one of Claims 12 to 14, wherein the controller (213) is configured to determine a length of the first web depending on a drying time for the viscous coating material (221) and a speed of the application head.

## Revendications

1. Procédé pour le recouvrement étanche d'une tête de vis (207, 303) d'une vis (205) traversant une surface de pièce (209) avec un matériau de revêtement visqueux (221), **caractérisé par** les étapes suivantes :
l'application (403) d'une première bande du matériau de revêtement visqueux (221) sur la surface de pièce (209) selon une première inclinaison (217) par rapport à la surface de pièce (209), la première bande du matériau de revêtement visqueux (221) recouvrant tout au plus partiellement la tête de vis (207, 303) après l'application (403) ; et
l'application (404) d'une deuxième bande de matériau de revêtement visqueux (221) sur la surface de pièce (209) selon une deuxième inclinaison (223) par rapport à la surface de pièce (209), la deuxième bande de matériau de revêtement visqueux (221) chevauchant la première bande après l'application (404) de telle sorte que la tête de vis (207, 303) est entièrement recouverte ; dans lequel la première inclinaison (217) et la deuxième inclinaison (223) sont opposées l'une à l'autre.

2. Procédé selon la revendication 1, dans lequel les étapes d'application (403, 404) comprennent un déplacement continu d'une buse (211) adaptée pour pulvériser le matériau de revêtement visqueux (221).

3. Procédé selon la revendication 2, dans lequel l'application (403) de la première bande et l'application (404) de la deuxième bande sont effectuées dans des directions d'application opposées de la buse (211).

4. Procédé selon l'une quelconque des revendications précédentes, dans lequel l'application (404) de la deuxième bande est effectuée pendant un temps de séchage du matériau de revêtement visqueux (221), notamment avant qu'une peau ne se soit formée sur la première bande.

5. Procédé selon l'une quelconque des revendications précédentes, dans lequel la pièce (203) est un boîtier de batterie, notamment avec des modules de batterie pour un véhicule, qui sont agencés dans le boîtier de batterie.

6. Procédé selon l'une quelconque des revendications précédentes, dans lequel la première inclinaison (217) et la deuxième inclinaison (223) sont chacune de 5° à partir d'une orientation orthogonale (215) par rapport à la surface de pièce (209).

7. Procédé selon l'une quelconque des revendications précédentes, dans lequel le recouvrement partiel lors de l'application (403) de la première bande comprend au moins 50 % de la surface de la tête de vis (207, 303), notamment jusqu'à 60 % de la surface de la tête de vis (207, 303).

8. Procédé selon l'une quelconque des revendications précédentes, dans lequel, lors de l'application (404) de la deuxième bande, le chevauchement comprend au moins 10 % de la première bande.

9. Procédé selon l'une quelconque des revendications précédentes, comprenant la fourniture (401) du matériau de revêtement visqueux (221), notamment la fourniture d'un matériau bicomposant en tant que matériau de revêtement visqueux (221).

10. Procédé selon l'une quelconque des revendications précédentes, comprenant une détection optique de l'application (403, 404), notamment par une caméra, et une correction de l'application (403, 404) lorsqu'il est détecté que l'application (403, 404) s'écarte d'une bande de consigne.

11. Procédé selon l'une quelconque des revendications précédentes, comprenant une définition (402) d'une bande d'application, dans lequel la bande d'application présente une longueur, dans lequel un temps de séchage du matériau de revêtement visqueux (221) et une vitesse d'application sont pris en compte lors de la définition de la bande d'application.

12. Système d'application (201) pour le recouvrement étanche d'une tête de vis (207, 303) d'une vis (205) traversant une surface de pièce (209) avec un matériau de revêtement visqueux (221), avec :
une tête d'application adaptée pour appliquer le matériau de revêtement visqueux (221) sur la surface de pièce (209) en une première bande selon une première inclinaison (217) par rapport à la surface de pièce (209) et en une deuxième bande selon une deuxième inclinaison (223) par rapport à la surface de pièce (209), la première inclinaison (217) et la deuxième inclinaison (223) étant opposées l'une à l'autre ; et
une commande (213) adaptée pour régler la première inclinaison (217) et la deuxième inclinaison (223) et pour commander la tête d'application de telle sorte que, lors de l'application (403) de la première bande du matériau de revêtement visqueux (221) sur la surface de pièce (209), la tête de vis (207, 303) est tout au plus partiellement recouverte et, lors de l'application (404) de la deuxième bande du matériau de revêtement visqueux (221) sur la surface de pièce (209), la deuxième bande du matériau de revêtement visqueux (221) chevauche la première bande après l'application (403, 404) de telle sorte que la tête de vis (207, 303) est entièrement recouverte.

13. Système d'application (201) selon la revendication 12, dans lequel la tête d'application comprend une buse (211) et deux raccords, dans lequel les deux raccords peuvent être raccordés à des récipients différents et sont adaptés pour transporter deux composants d'un matériau bicomposant vers la buse (211).

14. Système d'application (201) selon l'une quelconque des revendications 12 ou 13, dans lequel la commande (213) est adaptée pour rapporter la première inclinaison (217) et la deuxième inclinaison (223) à une perpendiculaire à la surface de pièce (209).

15. Système d'application selon l'une quelconque des revendications 12 à 14, dans lequel la commande (213) est adaptée pour déterminer une longueur de la première bande en fonction d'un temps de séchage du matériau de revêtement visqueux (221) et d'une vitesse de la tête d'application.
